# EUROPEAN PATENT APPLICATION

(11) **EP 4 530 622 A1**
(43) Date of publication of application: **02.04.2025**
(21) Application number: 22949096.6
(22) Date of filing: 28.11.2022
(51) Int. Cl.: G01N 27/62

(54) **ENRICHMENT METHOD AND ANALYSIS METHOD FOR PRECIOUS METAL ELEMENTS ON SURFACE OF WAFER**

(30) Priority: 29.06.2022 CN 202210750212
(71) Applicant: Jiangsu Leuven Instruments Co. Ltd, Xuzhou, Jiangsu 221300 (CN)
(72) Inventor: ZOU, Zhiwen, Xuzhou, Jiangsu 221300 (CN); ZHANG, Junhao, Xuzhou, Jiangsu 221300 (CN); HENG, Keji, Xuzhou, Jiangsu 221300 (CN); CHENG, Shiran, Xuzhou, Jiangsu 221300 (CN); MENG, Qingguo, Xuzhou, Jiangsu 221300 (CN); CUI, Hushan, Xuzhou, Jiangsu 221300 (CN); XU, Kaidong, Xuzhou, Jiangsu 221300 (CN)
(74) Representative: Eisenführ Speiser
(86) International application number: PCT/CN2022/134762
(87) International publication number: WO 2024/001016

(57) **Abstract**

An enrichment method and an analysis method for precious metal elements on the surface of a wafer. The enrichment method for the precious metal elements on the surface of the wafer comprises: first performing different treatments in sequence according to steps a), b), c) and d), thereby effectively transforming the precious metal elements in a metallic state to an ionic state, and changing the hydrophilic surface of the wafer into a hydrogen-passivated hydrophobic interface; and then, collecting metal contaminants from a hydrophobic interface layer by using a certain scanning liquid, then adding an alkaline solution for dilution, and controlling the pH value. According to the enrichment method, the scanning time can be obviously shortened, the collection efficiency of precious metal elements can be improved, and device corrosion can be effectively reduced.

## Description

This application claims priority to Chinese Patent Application No. 202210750212.6, titled "ENRICHMENT METHOD AND ANALYSIS METHOD FOR PRECIOUS METAL ELEMENTS ON SURFACE OF WAFER", filed on June 29, 2022 with the China National Intellectual Property Administration, which is incorporated herein by reference in its entirety.

### FIELD

The present disclosure relates to the field of detection and analysis, in particular to a method for enriching and analyzing noble metal elements on a surface of a wafer.

### BACKGROUND

During a processing of silicon chips (silicon wafers), various metal impurities contaminations will be introduced, which will lead to a failure of subsequent devices. For example, light metals (Na, Mg, Al, K, Ca, or the like) will cause the breakdown voltage of devices to decrease, and heavy metals (Cr, Mn, Fe, Ni, Cu, Zn, or the like) will cause the device life to decrease. Therefore, as silicon wafer is the raw material of the device, the content of metals on the surface of the silicon wafer can directly affect a qualified rate of the device. Therefore, it is very important to analyze the metal elements on the surface of the wafer.

Specific pollution problems can lead to different defects in semiconductor devices. Generally, these metal impurities are ultra-trace metal ions. At present, in order to test these ultra-trace metal ions on the surface of the wafer, a more common technical means currently used are generally: vapor phase decomposition (VPD) combined with one of the following elemental analysis devices:
1. Total Reflection X-ray Fluorescence Spectrometer (TXRF)

TXRF uses X-rays as an excitation source of fluorescence, therefore, some light metal elements such as Na, Mg, Al and other ultra-trace ions cannot be detected. TXRF is generally suitable for heavy metals.

2. Time of Flight Secondary Ion Mass Spectrometry (TOF-SIMS)

TOF-SIMS can detect all elements, but the calibration and quantification in the test are too complicated.

3. Inductively Coupled Plasma Mass Spectrometry (ICPMS)

ICP-MS can analyze almost all elements on the earth (Li-U). This technology is a new analytical testing technology developed in the 1980s. It is a new and powerful elemental analysis, isotope analysis and morphological analysis technology that combines the advantages of high temperature (8000K) ionization characteristics of ICP with sensitive and fast scanning of quadrupole mass spectrometer. This technology provides extremely low detection limits, extremely wide dynamic linear range, simple spectral lines, less interference, high analytical precision, fast analysis speed, and can provide isotope information and other analytical characteristics.

Therefore, ICP-MS becomes the best choice among the above three methods.

The testing process of metal elements on the surface of the silicon wafer (which can be fully automated) mainly includes the following four steps:
1. placing the silicon wafer in a VPD chamber and exposing it to a HF vapor to dissolve the native oxide or thermally oxidized SiO₂ surface layer;
2. placing an extraction droplet (generally 250 µL of 2% HF/2% H₂O₂) on the wafer and then tilting it in a carefully controlled manner so that the droplet "sweeps" across the wafer surface;
3. collecting dissolved SiO₂ and other contaminant metals as the extraction droplet moves across the wafer surface;
4. transferring the extraction droplet from the wafer surface to an ICP-MS or ICP-MS/MS system for analysis.

Driven by the strong momentum of Moore's Law, high-performance, low-power chips based on fin field-effect transistors (FinFET) of the 7nm technology generation are already integrated into today's smartphones, but few people know that a large number of new chemical elements are needed to make such powerful chips. Each technology generation introduces different chemical elements to meet the performance improvement of chips, for example, the introduction of hafnium (Hf) elements ushered in the era of high-k metal gates. The introduction of different chemical elements also brings about the difficulty of controlling metal contamination in chip manufacturing. As mentioned above, the vapor phase decomposition metal contamination collection system (VPD) combined with an inductively coupled plasma mass spectrometer (ICP-MS) is currently a common means of metal contamination detection, and its sensitivity can increase the detection sensitivity of various elements to E6 to 7 atoms/cm².

In addition to the above-mentioned logic devices driven by Moore's Law, some noble metal elements (Ru, Rh, Pd, Ag, Os, Ir, Pt, Au, or the like) are introduced in the field of more than Moore to manufacture advanced sensors, such as Ag (reflector), Au (biochip), Ir/Ru (magnetic sensor), Pd (carbon-based device), or the like. Because the chemical properties of noble metal elements are not active, it is generally difficult to collect by using the scanning liquid of the vapor phase decomposition metal collection system (VPD) composed of conventional hydrofluoric acid, hydrogen peroxide, and the like, so the control difficulty of metal contamination is greatly increased compared with conventional elements. According to literature research, compared to noble metal elements in ionic state, noble metals in metallic state are difficult to collect, which may be related to their chemical inertness. Although the industry has introduced scanning liquids based on aqua regia, the scanning time needs to be increased to about one hour to achieve a collection rate of metallic elements greater than 80%. Firstly, the collection efficiency of ≥1 hour/piece cannot meet the production capacity requirements in the field of microelectronics. Secondly, aqua regia is a mixture of highly corrosive and highly volatile concentrated nitric acid and concentrated hydrochloric acid, so requirements for collection device are extremely high. According to research, there is no VPD device and method that can quickly collect noble metal contamination in the industry currently.

### SUMMARY

In view of the above, the purpose of the present application is to provide a method for enriching and analyzing noble metal elements on the surface of a wafer. The method according to embodiments of the present application can effectively enrich the noble metal elements on the surface of the wafer, improve the collection efficiency of the noble metal element, and reduce device corrosion.

The present application provides a method for enriching noble metal elements on the surface of a wafer, comprising the following steps:
a) placing the wafer in a vHF chamber of a VPD device, introducing HF vapor into the vHF chamber for corrosion treatment, and then introducing an inert gas to purge and remove HF vapor residue in the vHF chamber;
b) introducing strong acid vapor and oxidizing vapor into the vHF chamber respectively for corrosion treatment, so that the noble metal elements on the surface of the wafer are corroded from a metallic state to an ionic state, and then introducing an inert gas to purge and remove the strong acid vapor and the oxidizing vapor in the vHF chamber;
c) introducing HF vapor and oxidizing vapor into the vHF chamber respectively into the vHF chamber for corrosion treatment to corrode away a surface layer with a thickness of 1 to 50 nm on the surface of the wafer;
d) introducing HF vapor continuously into the vHF chamber to hydrophobize the hydrophilic surface of the wafer, to form a hydrophobic interface layer, then, introducing an inert gas to purge and remove the HF vapor residue in the vHF chamber;
e) transferring the wafer obtained in step d) to a scanning chamber of the VPD device, and applying a scanning liquid to the hydrophobic interface layer of the wafer to collect metal contamination to obtain a collection liquid;
f) diluting the collection liquid with an alkaline solution to obtain a liquid to be analyzed.

In an embodiment, in step b):
the strong acid vapor is at least one selected from the group consisting of HCl vapor, HNO₃ vapor, HBr vapor, HI vapor and HClO₃ vapor;
the oxidizing vapor is at least one selected from the group consisting of O₃ vapor, H₂O₂ vapor and HClO₄ vapor;
in step c):
the oxidizing vapor is at least one selected from the group consisting of O₃ vapor, H₂O₂ vapor and HClO₄ vapor.

In an embodiment, in step a), the HF vapor is introduced at a flow rate of 100-2000 sccm for a duration of 1-3 min.

In an embodiment, in step b), the strong acid vapor is introduced at a flow rate of 30-5000sccm for a duration of 2-30min.

In an embodiment, in step b), the oxidizing vapor is introduced at a flow rate of 30-5000sccm for a duration of 2-30min.

In an embodiment, in step c), the HF vapor is introduced at a flow rate of 100-2000 sccm for a duration of 1-5 min.

In an embodiment, in step c), the oxidizing vapor is introduced at a flow rate of 100-1000sccm for a duration of 1-5min.

In an embodiment, in step d), the HF vapor is introduced at a flow rate of 500-2000 sccm for a duration of 15-300 s.

In an embodiment, in step f), the alkaline solution is at least one selected from the group consisting of ammonia solution, tetramethylammonium hydroxide solution and corrinoid solution.

In an embodiment, in step f), the alkaline solution is used in an amount such that the pH reaches 2 to 3.

In an embodiment, in step e), the scanning liquid comprises: a mixed acid liquid of HF acid liquid and other acid liquids;

the other acid liquid is at least one selected from the group consisting of HNO₃ acid liquid, HCl acid liquid and H₂O₂ acid liquid.

In an embodiment, for the noble metal element Ag, the scanning liquid used is: a mixed acid solution of HF acid liquid, HNO₃ acid liquid and water;
a mass percentage concentration of the HF acid liquid is 35% to 49%;
a mass percentage concentration of the HNO₃ acid liquid is 50% to 69%;
a volume ratio of the HF acid liquid : HNO₃ acid liquid : water is 1:(1 to 20):(1 to 100);
for the noble metal element Au, the scanning liquid used is: a mixed acid solution of HF acid liquid, HCl acid liquid and HNO₃ acid liquid;
a mass percentage concentration of the HF acid liquid is 35% to 49%;
a mass percentage concentration of the HCl acid liquid is 20% to 30%;
a mass percentage concentration of the HNO₃ acid liquid is 50% to 69%;
a volume ratio of the HF acid solution: HCl acid liquid: HNO₃ acid liquid is 1: (1 to 15): (1 to 5);
for the noble metal element Pt, the scanning liquid used is: a mixed acid solution of HF acid liquid and H₂O₂ acid liquid;
a mass percentage concentration of the HF acid liquid is 35% to 49%;
a mass percentage concentration of the H₂O₂ acid liquid is 28% to 35%;
a volume ratio of the HF acid liquid: H₂O₂ acid liquid is 1: (1 to 50).

In an embodiment, in the step b), the inert gas is introduced at a flow rate of 1000 to 20000sccm for a purge time of 2 to 10min.

In an embodiment, in the step d), the inert gas is introduced at a flow rate of 1000 to 20000sccm for a purge time of 1 to 5min.

In an embodiment, in step d), the inert gas is introduced at a flow rate of 1000 to 20000sccm for a purge time of 1 to 5min.

In an embodiment, in step a), the corrosion treatment is conducted at a temperature of 10 to 25°C.

In an embodiment, in step b), the corrosion treatment is conducted at a temperature of 10 to 25°C.

In an embodiment, in step c), the corrosion treatment is conducted at a temperature of 10 to 25°C.

In an embodiment, in step d), the scanning liquid acts on the surface of the wafer at a temperature condition of 10 to 25°C.

In an embodiment, in step d), the scanning liquid acts on the surface of the wafer for a duration of less than or equal to 15 min.

The present application further provides a method for analyzing noble metal elements on the surface of a wafer, comprising:
g), obtaining a liquid to be analyzed;
h), passing the liquid to be analyzed into an inductively coupled plasma mass spectrometer for elemental analysis;
the liquid to be analyzed is obtained by the method described in the above technical solution.

In the method for enriching noble metal elements on the surface of the wafer provided by the present application, first different treatments are performed according to steps a), b), c), and d) in sequence, to allow the noble metal elements to be effectively converted from the metallic state into the ionic state, and to convert a hydrophilic surface of the wafer into a hydrophobic interface with hydrogen passivation; then, a certain scanning liquid is used to collect metal contamination from the hydrophobic interface layer, and then an alkaline solution is added to dilute and control the pH value. The above-mentioned method of the present application can significantly shorten the scanning time and improve the collection efficiency of the noble metal elements. The reaction time of aqua regia and noble metal elementary substances needs to be more than 15 minutes to ensure a collection rate of more than 90%, and the scanning time is generally more than 30 minutes. However, the above-mentioned method of the present application can be completed within 15 minutes, realizing rapid collection of noble metal contamination. In addition, direct scanning with aqua regia will cause the volatilization of strong oxidation and strong corrosive gas, which has a great corrosive effect on devices. However, the method of the present application can effectively reduce device corrosion.

Experimental results show that the method according to the present application enables the collection rate of noble metal elements to be above 90% and the scanning time to be below 15 minutes. While ensuring a high collection rate, the scanning time is significantly shortened and the scanning collection efficiency is improved.

### BRIEF DESCRIPTION OF THE DRAWINGS

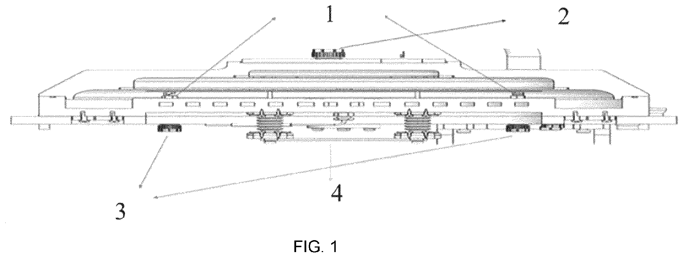

FIG. 1 is a schematic structural diagram of a VPD device used in the present application.

### DETAILED DESCRIPTION OF EMBODIMENTS

The present application provides a method for enriching noble metal elements on a surface of a wafer, comprising the following steps:
a) placing the wafer in a vHF chamber of a VPD device, introducing HF vapor into the vHF chamber for corrosion treatment, and then introducing an inert gas to purge and remove HF vapor residue in the vHF chamber;
b) introducing strong acid vapor and oxidizing vapor into the vHF chamber respectively for corrosion treatment, so that the noble metal elements on the surface of the wafer are corroded from a metallic state to an ionic state, and then introducing an inert gas to purge and remove the strong acid vapor and the oxidizing vapor in the vHF chamber;
c) introducing HF vapor and oxidizing vapor into the vHF chamber respectively into the vHF chamber for corrosion treatment to corrode away a surface layer with a thickness of 1 to 50 nm on the surface of the wafer;
d) introducing HF vapor continuously into the vHF chamber to hydrophobize the hydrophilic surface of the wafer, to form a hydrophobic interface layer, then, introducing an inert gas to purge and remove the HF vapor residue in the vHF chamber;
e) transferring the wafer obtained in step d) to a scanning chamber of the VPD device, and applying a scanning liquid to the hydrophobic interface layer of the wafer to collect metal contamination to obtain a collection liquid;
f) diluting the collection liquid with an alkaline solution to obtain a liquid to be analyzed.

[Referring to step a]:
a) placing the wafer in the vHF chamber of the VPD device, introducing the HF vapor into the vHF chamber for corrosion treatment, and then introducing an inert gas to purge and remove HF vapor residue in the vHF chamber.

In an embodiment, the type of the wafer is not particularly limited, and the wafer may be a conventional silicon wafer in the field.

In an embodiment, a structure of the VPD device (i.e., gas phase decomposition metal collection system) is basically the same as that of the conventional VPD device except that the structure of the VPD device in the present application is slightly improved and a quantity of nozzles is increased so that different gases may be introduced at the same time. Its structure is as shown in FIG. 1, which is a schematic structural diagram of the VPD device used in the present application, where 1 represents a nozzle, 2 represents an exhaust port, 3 represents Chiller water and connection port, and 4 represents an ejector pin lifting mechanism. The VPD device generally includes two chambers: a vHF chamber (i.e., a gas phase corrosion chamber) and a scanning chamber. In an embodiment, the material of the vHF chamber is preferably corrosion-resistant polyvinylidene fluoride (PVDF) and is sealed with a corrosion-resistant sealing ring. The exhaust system is connected to a tail gas collection barrel to collect acidic gas, and the excess acidic gas in the vHF chamber is discharged and collected. The tail gas collection barrel contains NaOH solution, and it cools the device and absorbs acidic waste gas. The tail gas collection barrel is provided with a pH display meter, and when the pH value reaches 4-5, replacing the NaOH solution will be reminded. There is a water channel in a base of the vHF chamber, and coolant can be passed in for cooling. The coolant temperature may be 5-100°C. A special gas leakage sensor is installed near the vHF chamber, which can sense HF gas, HCL gas, O₃ gas, and the like. An ejector pin structure is provided inside the vHF chamber for lifting and lowering the wafer.

In an embodiment, after the wafer is placed in the vHF chamber of the VPD device, the HF vapor is passed into the vHF chamber for corrosion treatment. In an embodiment, the flow rate of the HF vapor is preferably 100-2000sccm, specifically 100sccm, 500sccm, 1000sccm, 1500sccm, 2000sccm. The duration for introducing the HF vapor is preferably 1-3min, specifically 1min, 1.5min, 2min, 2.5min, 3min. In an embodiment, the temperature condition of the above-mentioned corrosion treatment is preferably 10-25°C, specifically 10°C, 15°C, 15°C, 20°C, 25°C. In an embodiment, the HF vapor is first introduced to perform corrosion treatment on the surface of the wafer, to corrode away SiO₂, SiNₓ or SiON and other substance on the surface of the wafer to hydrophobize the hydrophilic surface of the wafer.

In an embodiment, after the above-mentioned corrosion treatment is completed, the inert gas is introduced to purge and remove the HF vapor residue in the vHF chamber. There are no special restrictions on the type of the inert gas in the present application. The inert gas may be a conventional inert gas in the art, such as nitrogen, helium, neon or argon, or the like, and nitrogen is more preferred. In an embodiment, the flow rate of the inert gas is preferably 1000-20000sccm, and the duration for introducing is preferably 1-3min. The residual HF vapor in the vHF chamber is discharged by the purge of the inert gas.

[Referring to step b]:
b) introducing strong acid vapor and oxidizing vapor into the vHF chamber respectively for corrosion treatment, so that the noble metal elements on the surface of the wafer are corroded from a metallic state to an ionic state, and then introducing the inert gas to purge and remove the strong acid vapor and the oxidizing vapor in the vHF chamber.

In an embodiment, after step a) is completed, the strong acid vapor and oxidizing vapor are introduced into the vHF chamber for corrosion treatment respectively. Specifically, the above two vapors may be introduced into the vHF chamber in two ways through two nozzles respectively at the same time.

In an embodiment, the strong acid vapor is at least one selected from the group consisting of HCl vapor, HNO₃ vapor, HBr vapor, HI vapor and HClO₃ vapor. In an embodiment, the flow rate of the strong acid vapor is preferably 30-5000sccm, specifically 30sccm, 50sccm, 100sccm, 500sccm, 1000sccm, 1500sccm, 2000sccm, 2500sccm, 3000sccm, 3500sccm, 4000sccm, 4500sccm, 5000sccm. The duration for introducing the strong acid vapor is preferably 2-30min, specifically 2min, 5min, 10min, 15min, 20min, 25min, 30min.

In an embodiment, the oxidizing vapor is at least one selected from the group consisting of O₃ vapor, H₂O₂ vapor and HClO₄ vapor. In an embodiment, the flow rate of the oxidizing vapor is preferably 30-5000sccm, specifically 30sccm, 50sccm, 100sccm, 500sccm, 1000sccm, 1500sccm, 2000sccm, 2500sccm, 3000sccm, 3500sccm, 4000sccm, 4500sccm, 5000sccm. The duration for introducing the oxidizing vapor is preferably 2-30min, specifically 2min, 5min, 10min, 15min, 20min, 25min, 30min.

In an embodiment, the temperature condition of the above-mentioned corrosion treatment is preferably 10-25°C, specifically 10°C, 15°C, 15°C, 20°C, 25°C. The present application introduces the above two specific strong acid vapor and oxidizing vapor for corrosion treatment, so that the noble metal elements on the surface of the wafer are corroded from the metallic state into the ionic state.

In an embodiment, after the above-mentioned corrosion treatment is completed, an inert gas is introduced to purge and remove the strong acid vapor and oxidizing vapor residues in the vHF chamber. There are no special restrictions on the type of the inert gas in the present application, and the inert gas may be a conventional inert gas in the art, such as nitrogen, helium, neon or argon, or the like, and nitrogen is more preferred. In an embodiment, the flow rate of the inert gas is preferably 1000-20000sccm, and the duration for introducing is preferably 2-10min. The residual strong acid vapor and oxidizing vapor in the vHF chamber are discharged by the purge of the inert gas.

[Referring to step c]:
c) introducing the HF vapor and the oxidizing vapor into the vHF chamber respectively into the vHF chamber for corrosion treatment to corrode away a surface layer with a thickness of 1 to 50 nm on the surface of the wafer.

In an embodiment, after step b) is completed, the HF vapor and the oxidizing vapor are introduced into the vHF chamber respectively for corrosion treatment. Specifically, the above two vapors may be introduced into the vHF chamber in two ways through two nozzles respectively at the same time.

In an embodiment, the flow rate of the HF vapor is preferably 100-2000sccm, specifically 100sccm, 200sccm, 300sccm, 400sccm, 500sccm, 600sccm, 700sccm, 800sccm, 900sccm, 1000sccm. The duration for introducing the HF vapor is preferably 1-5min, specifically 1min, 2min, 3min, 4min, 5min.

In an embodiment, the oxidizing vapor is at least one selected from the group consisting of O₃ vapor, H₂O₂ vapor, and HClO₄ vapor. In an embodiment, the flow rate of the oxidizing vapor is preferably 100-1000sccm, specifically 100sccm, 150sccm, 200sccm, 250sccm, 300sccm, 350sccm, 400sccm, 450sccm, 500sccm, 550sccm, 600sccm, 650sccm, 700sccm, 750sccm, 800sccm, 850sccm, 900sccm, 950sccm, 1000sccm. The duration for introducing the oxidizing vapor is preferably 1-5min, specifically 1min, 2min, 3min, 4min, 5min.

In an embodiment, the temperature condition of the above-mentioned corrosion treatment is preferably 10-25°C, specifically 10°C, 15°C, 15°C, 20°C, 25°C. In the present application, introducing the above two specific HF vapor and oxidizing vapor for corrosion treatment corrodes away the surface layer with a thickness of 1 to 50 nm on the surface of the wafer, and continues to convert the noble metal from the metallic state into the ionic state.

[Referring to step d]:
d) introducing the HF vapor continuously into the vHF chamber to hydrophobize the hydrophilic surface of the wafer, to form a hydrophobic interface layer, then, introducing the inert gas to purge and remove the HF vapor residue in the vHF chamber.

In an embodiment, after the step c) is completed, the HF vapor is continuously introduced into the vHF chamber. In an embodiment, the flow rate of the HF vapor is preferably 500-2000sccm, specifically 500sccm, 600sccm, 700sccm, 800sccm, 900sccm, 1000sccm, 1100sccm, 1200sccm, 1300sccm, 1400sccm, 1500sccm, 1600sccm, 1700sccm, 1800sccm, 1900sccm, 2000sccm. The duration for introducing the HF vapor is preferably 15-300s, specifically 15s, 30s, 45s, 60s, 75s, 90s, 105s, 120s, 135s, 150s, 165s, 180s, 195s, 300s. In an embodiment, the temperature condition of the above treatment is preferably 10-25°C, specifically 10°C, 15°C, 15°C, 20°C, 25°C. In an embodiment, by continuing to perform the HF vapor treatment, the natural oxide layer on the wafer is further corroded away, so that the hydrophilic surface becomes a hydrophobic interface with hydrogen passivation.

In an embodiment, after the above-mentioned corrosion treatment is completed, an inert gas is introduced to purge and remove the strong acid vapor and oxidizing vapor residues in the vHF chamber. There are no special restrictions on the type of the inert gas in the present application, and the inert gas may be a conventional inert gas in the art, such as nitrogen, helium, neon or argon, or the like, and nitrogen is more preferred. In an embodiment, the flow rate of the inert gas is preferably 1000-20000sccm, and the duration for introducing is preferably 1-5min. The residual HF vapor in the vHF chamber is discharged by the purge of the inert gas.

[Referring to step e]:
e) transferring the wafer obtained in step d) to a scanning chamber of the VPD device, and applying a scanning liquid to the hydrophobic interface layer of the wafer to collect metal contamination to obtain a collection liquid.

In an embodiment, after the corrosion treatment is completed according to steps a)-d), the obtained wafer is transferred to the scanning chamber of the VPD device, and the scanning liquid is applied to the hydrophobic interface layer of the wafer to collect metal contamination. In an embodiment, there is no special restriction on the method of applying the scanning liquid, and it may be carried out according to the conventional operation in the field.

In an embodiment, the scanning liquid preferably includes: a mixed acid liquid of HF acid liquid and other acid liquids, where, the other acid liquids are at least one selected from the group consisting of HNO₃ acid liquid, HCl acid liquid and H₂O₂ acid liquid.

In an embodiment, different scanning liquids are used for different metal elements, specifically as follows:

For the noble metal element Ag, the scanning liquid used is: a mixed acid liquid of HF acid liquid, HNO₃ acid liquid and water. The mass percentage concentration of the HF acid liquid is preferably 35%-49%; the mass percentage concentration of the HNO₃ acid liquid is preferably 50%-69%; the volume ratio of the HF acid liquid: HNO₃ acid liquid: water is 1: (1-20): (1-100).

For the noble metal element Au, the scanning liquid used is: a mixed acid liquid of HF acid liquid, HCl acid liquid and HNO₃ acid liquid. The mass percentage concentration of the HF acid liquid is 35%-49%; the mass percentage concentration of the HCl acid liquid is 20%-30%; the mass percentage concentration of the HNO₃ acid liquid is 50%-69%; the volume ratio of the HF acid liquid: HCl acid liquid: HNO₃ acid liquid is 1: (1-15): (1-5).

For the noble metal element Pt, the scanning liquid used is: a mixed acid liquid of HF acid liquid and H₂O₂ acid liquid. The mass percentage concentration of the HF acid liquid is 35%-49%; the mass percentage concentration of the H₂O₂ acid liquid is 28%-35%; the volume ratio of the HF acid liquid: H₂O₂ acid liquid is 1: (1-50), which may be specifically 1:1, 1:5, 1:10, 1:15, 1:20, 1:25, 1:30, 1:35, 1:40, 1:45, 1:50.

In an embodiment, the scanning liquid acts on the scanning surface of the wafer for a duration of ≤ 15min, specifically 5-15min. In an embodiment, the scanning liquid acts on the surface of the wafer at a temperature condition of preferably 10-25°C, specifically 10°C, 15°C, 15°C, 20°C, 25°C. After the wafer is treated with the scanning liquid, the metal contamination on the surface of the wafer is collected to obtain a collection liquid containing metal contamination.

[Referring to step f]:
f) diluting the collection liquid with an alkaline solution to obtain a liquid to be analyzed.

In an embodiment, after step e) is completed, the alkaline solution is added to the collection liquid for diluting. The alkaline solution refers to an aqueous solution of an alkaline substance, preferably at least one of ammonia solution, tetramethylammonium hydroxide solution and corrinoid solution. In an embodiment, the mass percentage concentration of the alkaline solution is preferably 10%-25%, specifically 10%, 15%, 20%, 25%, and more preferably 20%.

In an embodiment, the alkaline solution is preferably added dropwise.

In an embodiment, the alkaline solution is added preferably in an amount such that the pH value reaches 2-3, specifically 2.0, 2.1, 2.2, 2.3, 2.4, 2.5, 2.6, 2.7, 2.8, 2.9, 3.0. In a case that the pH is too low, it will cause an acid effect on the mass spectrometer, which affects the analysis results. In a case that the pH is too high, some elements will precipitate, which also affects the analysis structure.

In an embodiment, the temperature condition of operating the step f) is preferably 10-25°C, specifically 10°C, 15°C, 15°C, 20°C, 25°C. After the operation of step f), the liquid to be analyzed may be obtained for subsequent elemental analysis.

Adding the alkaline solution to the collection liquid for diluting in the present application can prevent the scanning liquid from corroding the Pt cone of the mass spectrometer in ICP-MS analysis and reducing the service life of the mass spectrometer. Moreover, the alkaline substance allows the noble metal to form a ligand with ammonia, which is conducive to maintaining the stability of metal ions and preventing ion precipitation.

In the method for enriching noble metal elements on the surface of the wafer provided by the present application, first different treatments are performed according to steps a), b), c), and d) in sequence, to allow the noble metal elements to be effectively converted from the metallic state into the ionic state, and to convert a hydrophilic surface of the wafer into a hydrophobic interface with hydrogen passivation; then, a certain scanning liquid is used to collect metal contamination from the hydrophobic interface layer, and then an alkaline solution is added to dilute and control the pH value. The above-mentioned method of the present application can significantly shorten the scanning time and improve the collection efficiency of the noble metal elements. The reaction time of aqua regia and noble metal elementary substances needs to be more than 15 minutes to ensure a collection rate of more than 90%, and the scanning time is generally more than 30 minutes. However, the above-mentioned method of the present application can be completed within 15 minutes, realizing rapid collection of noble metal contamination. In addition, direct scanning with aqua regia will cause the volatilization of strong oxidation and strong corrosive gas, which has a great corrosive effect on devices. However, the method of the present application can effectively reduce device corrosion.

The present application further provides a method for analyzing noble metal elements on the surface of a wafer, comprising:
g) obtaining a liquid to be analyzed;
h) passing the liquid to be analyzed into an inductively coupled plasma mass spectrometer for elemental analysis.
where, the liquid to be analyzed is obtained by the method for enriching noble metal elements as described above, i.e., step K1 is the method for enriching noble metal elements as described above. In step K2, there is no special restriction on the manner in which the liquid to be analyzed is passed into the inductively coupled plasma mass spectrometer (ICP-MS) for elemental analysis, which may be performed according to conventional operations in the field. A quantitative analysis result of noble metal contamination on the surface of the wafer can be obtained through analysis.

The experimental results show that the method according to embodiments of the present application allows the collection rate of noble metal elements to be above 90%, and the scanning time is below 15 minutes. While ensuring a high collection rate, the scanning time is significantly shortened, and the scanning collection efficiency is improved.

In order to further understand the present application, the preferred embodiments of the present application are described below in conjunction with the examples, but it should be understood that these descriptions are only for further illustrating the features and advantages of the present application, and are not limitations on the claims of the present application.

### Example 1

a) The wafer was placed in the vHF chamber of the VPD device, the HF vapor (flow rate of 1500sccm, introduction time of 2min) was introduced into the vHF chamber for corrosion treatment at 20°C. Then, N₂ (flow rate of 5000sccm, introduction time of 3min) was introduced to purge and remove the HF vapor residue in the vHF chamber.
b) The strong acid vapor (HCl vapor) and oxidizing vapor (O₃ vapor) were respectively introduced into the vHF chamber for corrosion treatment at 15°C, where the flow rate of both vapors was 1000sccm and the introduction time of both vapors was 10min. After the corrosion treatment, the noble metal elements on the surface of the wafer were corroded from the metallic state into the ionic state. Then, N₂ (flow rate of 10000sccm, introduction time of 5min) was introduced to purge and remove the strong acid vapor and oxidizing vapor residue in the vHF chamber.
c) The HF vapor and the oxidizing vapor (O₃ vapor) were respectively introduced into the vHF chamber at 15°C for corrosion treatment, where the flow rate of both vapors was 700sccm, and the introduction time was 5min. After the corrosion treatment, the surface layer of 30nm thick on the surface of the wafer was corroded away.
d) The HF vapor (flow rate of 500sccm, introduction time of 300s) was continuously introduced into the vHF chamber for surface treatment at 20°C to hydrophobize the hydrophilic surface of the wafer and form a hydrophobic interface layer. Then, N₂ (flow rate of 3000sccm, introduction time of 3min) was introduced to purge and remove the HF vapor residue in the vHF chamber.
e) The wafer obtained in step d) was transferred to the scanning chamber of the VPD device, and the scanning liquid was applied to the hydrophobic interface layer of the wafer to collect metal contamination. After scanning at 25°C for 12min, the scanning liquid was collected to obtain a collection liquid;
   where, the scanning liquid used was a mixed acid liquid of HF acid liquid, HNO₃ acid liquid and water; the concentration of the HF acid liquid was 38%; the concentration of the HNO₃ acid liquid was 55%; the volume ratio of the HF acid liquid: HNO₃ acid liquid: water was 1:1:1.
f) The alkaline solution (ammonia solution, mass percentage concentration of 20%) was added into the collection liquid to make the pH value reach 2 to obtain the liquid to be analyzed.
h) The obtained liquid to be analyzed was passed into the inductively coupled plasma mass spectrometer for elemental analysis.

The test results are shown as follows:
Sample size: 12-inch wafer.
Test level: E7 level. (i.e. E7 atoms/cm²)

The effect data is shown in Table 1:
In Table 1, a volume of the recovery liquid for the spiked recovery scan is set to 1mL; the unit of the spike recovery value is ppt, and the calculation formula is (1-m₂/m₁)×100; where, m₁=C₁×V₁, m₂=C₂×V₂; C₁ refers to the first recovery concentration ppt, V₁ refers to the recovery liquid volume mL of the first spiked recovery, C₂ refers to the second recovery concentration ppt, and V₂ refers to the recovery liquid volume mL of the second spiked recovery. The process of the spiked recovery test is as follows: 100µL of quantitative standard solution (containing ruthenium, silver, hafnium, platinum, and gold) was evenly dripped on a new 12-inch wafer through a manual operation device and dried through a drying chamber. The wafer was scanned twice through the following VPD path: FOUP → aligner → vHF → aligner → scanning → test tube → ICP-MS analysis.

**Table 1: Elemental analysis results of Example 1**

| Elements | First spiked recovery scan, ppt | Second spiked recovery scan, ppt | Collection rate, % |
|---|---|---|---|
| Ruthenium | 848.7 | 34.8 | 95.9 |
| Silver | 869.9 | 43.2 | 95.0 |
| Hafnium | 895.2 | 43.0 | 95.2 |
| Platinum | 878.8 | 39.0 | 95.5 |
| Gold | 792.0 | 40.6 | 94.8 |

### Example 2

a) The wafer was placed in the vHF chamber of the VPD device, the HF vapor (flow rate of 1800sccm, introduction time of 3min) was introduced into the vHF chamber for corrosion treatment at 20°C. Then, N₂ (flow rate of 3000sccm, introduction time of 2min) was introduced to purge and remove the HF vapor residue in the vHF chamber.
b) The strong acid vapor (HNO₃ vapor) and oxidizing vapor (H₂O₂ vapor) were respectively introduced into the vHF chamber for corrosion treatment at 15°C, where the flow rate of both vapors was 1000sccm and the introduction time of both vapors was 20min. After the corrosion treatment, the noble metal elements on the surface of the wafer were corroded from the metallic state into the ionic state. Then, N₂ (flow rate of 10000sccm, introduction time of 4min) was introduced to purge and remove the strong acid vapor and oxidizing vapor residue in the vHF chamber.
c) The HF vapor and the oxidizing vapor (H₂O₂ vapor) were respectively introduced into the vHF chamber at 10°C for corrosion treatment, where the flow rate of both vapors was 500sccm, and the introduction time was 3min. After the corrosion treatment, the surface layer of 20nm thick on the surface of the wafer was corroded away.
d) The HF vapor (flow rate of 1000sccm, introduction time of 200s) was continuously introduced into the vHF chamber for surface treatment at 20°C to hydrophobize the hydrophilic surface of the wafer and form a hydrophobic interface layer. Then, N₂ (flow rate of 5000sccm, introduction time of 2min) was introduced to purge and remove the HF vapor residue in the vHF chamber.
e) The wafer obtained in step d) was transferred to the scanning chamber of the VPD device, and the scanning liquid was applied to the hydrophobic interface layer of the wafer to collect metal contamination. After scanning at 25°C for 15min, the scanning liquid was collected to obtain a collection liquid;
where, the scanning liquid was a mixed acid liquid of HF acid liquid, HCl acid liquid and HNO₃ acid liquid; the concentration of the HF acid liquid was 49%; the concentration of the HCl acid liquid was 31%; the concentration of the HNO₃ acid liquid was 69%; the volume ratio of the HF acid liquid: HNO₃ acid liquid: water was 1:1:5;
f) The alkaline solution (tetramethylammonium hydroxide solution, mass percentage concentration of 20%) was added into the collection liquid to make the pH value reach 2.5 to obtain the liquid to be analyzed.
h) The obtained liquid to be analyzed was passed into the inductively coupled plasma mass spectrometer for elemental analysis.

The test results are shown as follows:
Sample size: 12-inch wafer.

Test level: E7 level. (i.e. E7 atoms/cm²)The effect data is shown in Table 2:

**Table 2: Elemental analysis results of Example 2**

| Elements | First spiked recovery scan, ppt | Second spiked recovery scan, ppt | Collection rate, % |
|---|---|---|---|
| Ruthenium | 967.1 | 65.9 | 93.2 |
| Silver | 998.8 | 46.7 | 95.3 |
| Hafnium | 1028.1 | 45.7 | 95.5 |
| Platinum | 1023.4 | 44.4 | 95.6 |
| Gold | 891.3 | 38.7 | 95.6 |

Example 3
a) The wafer was placed in the vHF chamber of the VPD device, the HF vapor (flow rate of 1000sccm, introduction time of 3min) was introduced into the vHF chamber for corrosion treatment at 25°C. Then, N₂ (flow rate of 3000sccm, introduction time of 1.5min) was introduced to purge and remove the HF vapor residue in the vHF chamber.
b) The strong acid vapor (HBr vapor) and oxidizing vapor (HClO₄ vapor) were respectively introduced into the vHF chamber for corrosion treatment at 10°C, where the flow rate of both vapors was 3000sccm and the introduction time of both vapors was 10min. After the corrosion treatment, the noble metal elements on the surface of the wafer were corroded from the metallic state into the ionic state. Then, N₂ (flow rate of 5000sccm, introduction time of 4min) was introduced to purge and remove the strong acid vapor and oxidizing vapor residue in the vHF chamber.
c) The HF vapor and the oxidizing vapor (HClO₄ vapor) were respectively introduced into the vHF chamber at 15°C for corrosion treatment, where the flow rate of both vapors was 1000sccm, and the introduction time was 2min. After the corrosion treatment, the surface layer of 25nm thick on the surface of the wafer was corroded away.
d) The HF vapor (flow rate of 1500sccm, introduction time of 100s) was continuously introduced into the vHF chamber for surface treatment at 25°C to hydrophobize the hydrophilic surface of the wafer and form a hydrophobic interface layer. Then, N₂ (flow rate of 10000sccm, introduction time of 1.5min) was introduced to purge and remove the HF vapor residue in the vHF chamber.
e) The wafer obtained in step d) was transferred to the scanning chamber of the VPD device, and the scanning liquid was applied to the hydrophobic interface layer of the wafer to collect metal contamination. After scanning at 25°C for 10min, the scanning liquid was collected to obtain a collection liquid;
where, the scanning liquid was a mixed acid liquid of HF acid liquid and H₂O₂ acid liquid; the concentration of the HF acid liquid was 49%; the concentration of the H₂O₂ acid liquid was 33%; the volume ratio of the HF acid liquid: H₂O₂ acid liquid: water was 1:10;
f) The alkaline solution (corrinoid solution, mass percentage concentration of 20%) was added to the collection liquid to make the pH value reach 3 to obtain the liquid to be analyzed.
h) The obtained liquid to be analyzed was passed into the inductively coupled plasma mass spectrometer for elemental analysis.

The test results are shown as follows:
Sample size: 12-inch wafer.

Test level: E7 level. (i.e. E7 atoms/cm²)The effect data is shown in Table 3:

**Table 3: Elemental analysis results of Example 3**

| Elements | First spiked recovery scan, ppt | Second spiked recovery scan, ppt | Collection rate, % |
|---|---|---|---|
| Ruthenium | 847.1 | 36.4 | 95.7 |
| Silver | 898.1 | 45.0 | 94.9 |
| Hafnium | 935.4 | 47.3 | 94.9 |
| Platinum | 925.9 | 47.6 | 94.8 |
| Gold | 805.4 | 43.0 | 94.6 |

Example 4
a) The wafer was placed in the vHF chamber of the VPD device, the HF vapor (flow rate of 800sccm, introduction time of 3min) was introduced into the vHF chamber for corrosion treatment at 25°C. Then, N₂ (flow rate of 4000sccm, introduction time of 4min) was introduced to purge and remove the HF vapor residue in the vHF chamber.
b) The strong acid vapor (HClO₃ vapor) and oxidizing vapor (O₃ vapor) were respectively introduced into the vHF chamber for corrosion treatment at 15°C, where the flow rate of both vapors was 5000sccm and the introduction time of both vapors was 5min. After the corrosion treatment, the noble metal elements on the surface of the wafer were corroded from the metallic state into the ionic state. Then, N₂ (flow rate of 10000sccm, introduction time of 3min) was introduced to purge and remove the strong acid vapor and oxidizing vapor residue in the vHF chamber.
c) The HF vapor and the oxidizing vapor (O₃ vapor) were respectively introduced into the vHF chamber at 15°C for corrosion treatment, where the flow rate of both vapors was 1000sccm, and the introduction time was 2min. After the corrosion treatment, the surface layer of 25nm thick on the surface of the wafer was corroded away.
d) The HF vapor (flow rate of 2000sccm, introduction time of 50s) was continuously introduced into the vHF chamber for surface treatment at 25°C to hydrophobize the hydrophilic surface of the wafer and form a hydrophobic interface layer. Then, N₂ (flow rate of 5000sccm, introduction time of 3min) was introduced to purge and remove the HF vapor residue in the vHF chamber.
e) The wafer obtained in step d) was transferred to the scanning chamber of the VPD device, and the scanning liquid was applied to the hydrophobic interface layer of the wafer to collect metal contamination. After scanning at 25°C for 8min, the scanning liquid was collected to obtain a collection liquid;
where, the scanning liquid was a mixed acid liquid of HF acid liquid and H₂O₂ acid liquid; the concentration of the HF acid liquid was 35%; the concentration of the H₂O₂ acid liquid was 28%; the volume ratio of the HF acid liquid to the H₂O₂ acid liquid was 1:10;
f) The alkaline solution (corrinoid solution, mass percentage concentration of 20%) was added to the collection liquid to make the pH value reach 3 to obtain the liquid to be analyzed.
h) The obtained liquid to be analyzed was passed into the inductively coupled plasma mass spectrometer for elemental analysis.

The test results are shown as follows:
Sample size: 12-inch wafer.

Test level: E7 level. (i.e. E7 atoms/cm²)
The effect data is shown in Table 4:

**Table 4: Elemental analysis results of Example 4**

| Elements | First spiked recovery scan, ppt | Second spiked recovery scan, ppt | Collection rate, % |
|---|---|---|---|
| Ruthenium | 868.7 | 44.8 | 94.84 |
| Silver | 879.9 | 33.2 | 96.23 |
| Hafnium | 885.2 | 39.0 | 95.59 |
| Platinum | 858.8 | 49.0 | 94.29 |
| Gold | 832.0 | 41.6 | 95.00 |

It can be seen from the test results of Examples 1 to 4 that the collection rate of the noble metal elements in the method provided by the present application is above 90%, and the scanning time is below 15 minutes. While ensuring a high collection rate, the scanning time is significantly shortened, and the scanning collection efficiency is improved.

This application uses specific examples to illustrate principles and implementation methods of the present application. The description of the above embodiments is only configured to help understand the method of the present application and its core ideas, including the best implementation, and also enables any technician in the field to practice the present application, including the manufacture and use of any device or system, and the implementation of any combined method. It should be pointed out that for those skilled in the art, without departing from the principles of the present application, the present application can also be improved and modified in several ways, and these improvements and modifications fall within the protection scope of the claims of the present application. The protection scope of the present application is defined by the claims and may include other embodiments that can be thought of by those skilled in the art. In a case that these other embodiments have structural elements similar to the textual expression of the claims, or in a case that they include equivalent structural elements that are not substantially different from the textual expression of the claims, these other embodiments should also be included in the scope of the claims.

## Claims

1. A method for enriching noble metal elements on a surface of a wafer, comprising the following steps:
a) placing the wafer in a vHF chamber of a VPD device, introducing HF vapor into the vHF chamber for corrosion treatment, and then introducing an inert gas to purge and remove HF vapor residue in the vHF chamber;
b) introducing strong acid vapor and oxidizing vapor into the vHF chamber respectively for corrosion treatment, so that the noble metal elements on the surface of the wafer are corroded from a metallic state to an ionic state, and then introducing an inert gas to purge and remove the strong acid vapor and the oxidizing vapor in the vHF chamber;
c) introducing HF vapor and oxidizing vapor into the vHF chamber respectively into the vHF chamber for corrosion treatment to corrode away a surface layer with a thickness of 1 to 50 nm on the surface of the wafer;
d) introducing HF vapor continuously into the vHF chamber to hydrophobize the hydrophilic surface of the wafer, to form a hydrophobic interface layer, then, introducing an inert gas to purge and remove the HF vapor residue in the vHF chamber;
e) transferring the wafer obtained in step d) to a scanning chamber of the VPD device, and applying a scanning liquid to the hydrophobic interface layer of the wafer to collect metal contamination to obtain a collection liquid;
f) diluting the collection liquid with an alkaline solution to obtain a liquid to be analyzed.

2. The method according to claim 1, wherein in step b):
the strong acid vapor is at least one selected from the group consisting of HCl vapor, HNO₃ vapor, HBr vapor, HI vapor and HClO₃ vapor;
the oxidizing vapor is at least one selected from the group consisting of O₃ vapor, H₂O₂ vapor and HClO₄ vapor;
in step c):
the oxidizing vapor is at least one selected from the group consisting of O₃ vapor, H₂O₂ vapor and HClO₄ vapor.

3. The method according to claim 1 or 2, wherein in step a), the **HF** vapor is introduced at a flow rate of 100-2000 sccm for a duration of 1-3 min.

4. The method according to claim 1 or 2, wherein in step b), the strong acid vapor is introduced at a flow rate of 30-5000sccm for a duration of 2-30min.

5. The method according to claim 1 or 2, wherein in step b), the oxidizing vapor is introduced at a flow rate of 30-5000sccm for a duration of 2-30min.

6. The method according to claim 1 or 2, wherein in step c), the **HF** vapor is introduced at a flow rate of 100-2000 sccm for a duration of 1-5 min.

7. The method according to claim 1 or 2, wherein in step c), the oxidizing vapor is introduced at a flow rate of 100-1000sccm for a duration of 1-5min.

8. The method according to claim 1 or 2, wherein in step d), the **HF** vapor is introduced at a flow rate of 500-2000 sccm for a duration of 15-300s.

9. The method according to claim 1 or 2, wherein in step f), the alkaline solution is at least one selected from the group consisting of ammonia solution, tetramethylammonium hydroxide solution and corrinoid solution.

10. The method according to claim 1 or 2, wherein in step f), the alkaline solution is added in an amount such that the pH reaches 2 to 3.

11. The method according to claim 1 or 2, wherein in step e), the scanning liquid comprises: a mixed acid liquid of **HF** acid liquid and other acid liquids;
the other acid liquid is at least one selected from the group consisting of HNO₃ acid liquid, HCl acid liquid and H₂O₂ acid liquid.

12. The method according to claim 11, wherein for the noble metal element Ag, the scanning liquid used is: a mixed acid solution of HF acid liquid, HNO₃acid liquid and water;
a mass percentage concentration of the HF acid liquid is 35% to 49%;
a mass percentage concentration of the HNO₃ acid liquid is 50% to 69%;
a volume ratio of the HF acid liquid : HNO₃acid liquid : water is 1:(1 to 20):(1 to 100);
for the noble metal element Au, the scanning liquid used is: a mixed acid solution of HF acid liquid, HCl acid liquid and HNO₃ acid liquid;
a mass percentage concentration of the HF acid liquid is 35% to 49%;
a mass percentage concentration of the HCl acid liquid is 20% to 30%;
a mass percentage concentration of the HNO₃ acid liquid is 50% to 69%;
a volume ratio of the HF acid solution: HCl acid liquid: HNO₃acid liquid is 1: (1 to 15): (1 to 5);
for the noble metal element Pt, the scanning liquid used is: a mixed acid solution of HF acid liquid and H₂O₂ acid liquid;
a mass percentage concentration of the HF acid liquid is 35% to 49%;
a mass percentage concentration of the H₂O₂ acid liquid is 28% to 35%;
a volume ratio of the HF acid liquid: H₂O₂ acid liquid is 1: (1 to 50).

13. The method according to claim 1 or 2, wherein in step b), the inert gas is introduced at a flow rate of 1000-20000sccm for a purge time of 2-10min.

14. The method according to claim 1 or 2, wherein in step d), the inert gas is introduced at a flow rate of 1000-20000sccm for a purge time of 1-5min.

15. The method according to claim 1 or 2, wherein in step a), the corrosion treatment is conducted at a temperature of 10-25°C.

16. The method according to claim 1 or 2, wherein in step b), the corrosion treatment is conducted at a temperature of 10-25°C.

17. The method according to claim 1 or 2, wherein in step c), the corrosion treatment is conducted at a temperature of 10-25°C.

18. The method according to claim 1 or 2, wherein in step d), the scanning liquid acts on the surface of the wafer at a temperature condition of 10-25°C.

19. The method according to claim 1 or 2, wherein in step d), the scanning liquid acts on the surface of the wafer for a duration of ≤ 15 min.

20. A method for analyzing noble metal elements on a surface of a wafer, comprising:
g), obtaining a liquid to be analyzed;
h), passing the liquid to be analyzed into an inductively coupled plasma mass spectrometer for elemental analysis;
wherein the liquid to be analyzed is obtained by the method according to any one of claims 1 to 19.
